# EUROPEAN PATENT SPECIFICATION

(11) **EP 3 431 307 B1**
(45) Date of publication and mention of the grant of the patent: **25.01.2023**
(21) Application number: 17182629.0
(22) Date of filing: 21.07.2017
(51) Int. Cl.: B60B 17/00

(54) **WHEEL UNITS FOR RAIL VEHICLES**
RADEINHEITEN FÜR SCHIENENFAHRZEUGE
UNITÉS DE ROUE POUR VÉHICULES SUR RAILS

(43) Date of publication of application: 23.01.2019
(73) Proprietor: Bombardier Transportation GmbH, 10785 Berlin (DE)
(72) Inventor: Dede, Jani, 57076 Siegen (DE); Pusnik, Arne, 57074 Siegen (DE); Reimann, Marc Andre, 57076 Siegen (DE); Thomas, Yannik, 57258 Freudenberg (DE)
(74) Representative: Cohausz & Florack

(56) References cited:
- DE-B4-102006 034 896
- DE-C- 862 458
- DE-C- 959 920
- GB-A- 2 053 104

## Description

### BACKGROUND OF THE INVENTION

The present invention relates to a wheel unit for a rail vehicle having a nominal speed above 140 km/h, in particular, a high-speed rail vehicle, the wheel unit comprising a rim section, wherein the rim section defines a rolling axis of the wheel, a rim width along the rolling axis and a tread datum plane perpendicular to the rolling axis. The rim section has a sectional contour in a sectional plane comprising the rolling axis, wherein the sectional contour comprises a wheel profile section. The wheel profile section comprises a flange section and a tread section, wherein the tread section is configured to contact a rail of a track in a contact location during normal operation of the wheel unit. The tread section, in an unworn or re-profiled state, comprises a non-cylindrical contour section. The present invention further relates to a corresponding wheel set comprising two such wheel units, to a corresponding running gear for a rail vehicle comprising such a wheel set as well as a corresponding rail comprising such a running gear. The present invention further relates to a method for designing a wheel unit.

Wheel units as described above are well known in the art and all share the common feature of a continuously curved wheel profile to achieve favorable wheel-to-rail contact conditions. An example of such a wheel profiles is the widely used profile referred to as "S1002" profile or the commonly used "EPS" profile as described in DIN EN 13715. In order to reduce wear of the wheels and, thus, an undesired wear-induced increase in the so called equivalent conicity (which is a commonly used parameter to define the dynamic behavior of a wheel set) EP 0 760 294 A2 describes wheel units referred to as "DBS-320", "DBS-315", "DBS-310" and "DBS-305", which are modified variants of the "S1002" profile in terms of curvature. Furthermore, DE 10 2006 034 896 B4 describes a wheel unit, referred to as "DBS 0525", which exhibits a tread section which is less inclined with respect to the rolling axis of the wheel than the tread section of the "S1002" profile.

Despite all these attempts, these prior art wheel units are highly susceptible to alterations of the wheel-to-rail contact and exhibit an adverse wear behavior which causes a more or less rapid increase in the equivalent conicity over time. Such an increase in the equivalent conicity results in an increase in the frequency of the hunting motion of the wheel set along the track and, ultimately, an increased risk of instability of the running gear, which is especially critical for vehicles running at high nominal speeds. Hence, such instability has to be avoided under any circumstances during operation, such that re-profiling has to occur well before any such instability might occur. This considerably reduces the available mileage (before re-profiling has to occur) and, consequently, the re-profiling interval of the respective wheel units.

### SUMMARY OF THE INVENTION

Thus, it is the object of the present invention to provide a wheel unit as described above, which does not show the disadvantages described above, or at least shows them to a lesser extent, and, in particular, exhibits a more favorable wear behavior which allows for longer re-profiling intervals.

The above objects are achieved starting from a wheel unit according to the preamble of claim 1 by the features of the characterizing part of claim 1 as well as starting from a method for designing a wheel unit according to the preamble of claim 16 by the features of the characterizing part of claim 16.

The present invention is based on the technical teaching that an improved wear behavior of the tread section and a slower wear-induced increase in the equivalent conicity can be accomplished, respectively, if the tread section comprises a cylindrical contour section. Such a cylindrical contour section of the tread section has the beneficial effect that, at least during operation at a nominal speed on a straight level track, an indifferent contact location behavior with a statistical distribution (over time) of the contact location along the rolling axis prevails over the cylindrical contour section. With such a design with at least one cylindrical contour section, at least during operation at a nominal speed on a straight level track, not least due to the statistical distribution of the contact location, an indifferent wear behavior with a statistical distribution of wear of the tread section along the rolling axis prevails over the cylindrical contour section.

It will be appreciated that, preferably, the cylindrical contour section is a continuous contour section. Nevertheless, with certain embodiments, two or more cylindrical areas of the cylindrical contour section may be separated by (one or more) slightly non-cylindrical spaces, as long as the above indifferent contact loaction behavior and/or the above indifferent wear behavior is achieved over the cylindrical contour section.

It will be appreciated that, ultimately, such improved contact behavior and wear behavior, respectively, and such reduced increase in the equivalent conicity leads to a long term driving stability and longer re-profiling intervals.

Hence, according to one aspect, the present invention relates to a wheel unit for a rail vehicle having a nominal speed above 140 km/h, in particular, a high-speed rail vehicle, wherein the wheel unit comprises a rim section and the rim section defines a rolling axis of the wheel, a rim width along the rolling axis and a tread datum plane perpendicular to the rolling axis. The rim section has a sectional contour in a sectional plane comprising the rolling axis, wherein the sectional contour comprises a wheel profile section. The wheel profile section comprises a flange section and a tread section, wherein the tread section is configured to contact a rail of a track in a contact location during normal operation of the wheel unit. The tread section, in an unworn or re-profiled state, comprises a non-cylindrical contour section. The tread section, in an unworn or re-profiled state, further comprises a cylindrical contour section. The cylindrical contour section, along the rolling axis, has an inner end, an outer end and a cylindrical contour width between the inner end and the outer end. The cylindrical contour section is located such that, along the rolling axis, one of the inner end and the outer end has an end distance from the tread datum plane which is at most 50% of the cylindrical contour width. Furthermore, the cylindrical contour section intersects the tread datum plane.

In principle, in particular as a function of the ratio between curved sections of the track and straight sections of the track on which the wheel is intended to run, any desired and suitable location may be chosen for the inner end and the outer end of the cylindrical contour section and, hence, any suitable cylindrical contour width may be chosen.

Preferably, the end distance is 0% to 50%, preferably 10% to 40%, more preferably 20% to 30%, of the cylindrical contour width. In addition or as alternative, the end distance is 0 mm to 30 mm, preferably 5 mm to 25 mm, more preferably 5 mm to 10 mm. In addition or as alternative the inner end of the cylindrical contour section has the end distance from the tread datum plane. In addition or as an alternative the inner end is located between the flange section and the tread datum plane. In any of these cases particularly favorable indifferent contact location behavior and a favorable indifferent wear behavior, respectively, may be achieved over the cylindrical contour section.

With certain favorable variants, the cylindrical contour width is at least 4%, preferably at least 7%, more preferably at least 10%, of the rim width. In addition or as an alternative the cylindrical contour width is at least 5 mm, preferably at least 10 mm, more preferably at least 15 mm. In addition or as an alternative the cylindrical contour width is at most 14%, preferably at most 16%, more preferably at most 18%, of the rim width. In addition or as an alternative, the cylindrical contour width is at most 20 mm, preferably at most 22 mm, more preferably at most 25 mm. In any of these cases particularly favorable indifferent contact location behavior and a favorable indifferent wear behavior, respectively, may be achieved over a sufficiently large cylindrical contour section.

With particularly favorable configurations exhibiting suitably indifferent behavior, the geometry of the cylindrical contour section is kept within certain favorable tolerances. These tolerances may depend on either of the material or material combination of the wheel and the rail, the track profile of the track (on which the wheel is to be used,), the operational parameters of the vehicle (in particular, nominal load, nominal speed etc.), manufacturing tolerances or any other parameter of noticeable influence as well as any combinations of these. Preferably, the cylindrical contour section, over the cylindrical contour width, has a deviation from an ideally cylindrical contour, wherein the deviation is such that a local inclination of the cylindrical contour section with respect to the ideally cylindrical contour is less than 1/200, preferably less than 1/250, more preferably less than 1/300.

It will be appreciated that, apart from the cylindrical contour section, basically any desired and suitable wheel profile section geometry may be chosen. With certain preferred embodiments showing particularly favorable curve behavior, the wheel profile section comprises an at least partially curved fillet section (sometimes also referred to as the flange root section) which is located between the flange section and the inner end of the cylindrical contour section. The fillet section is preferably configured such that, at least in an unworn or re-profiled state, upon a lateral displacement of the rim section on the rail along the rolling axis during normal operation, the contact location continuously shifts over the fillet section. In addition or as an alternative, the fillet section is configured such that, at least in an unworn or re-profiled state, upon a lateral displacement of the rim section on the rail along the rolling axis at any time during normal operation on a straight track, the contact location forms the single coherent contact location between the rim section and the rail. By any of these means, particularly favorable wear behavior as well as particularly favorable curve behavior may be achieved.

The fillet section is preferably configured as a function of a geometry of the track on which the wheel unit is intended to be operated, in particular as a function of a curve radius distribution along the track. In addition or as an alternative, the fillet section may be configured as a function of a geometry of a rail head of the rail. In addition or as an alternative, the fillet section may be configured as a function of an inclination of the rail, in particular, as a function of a web of the rail, with respect to a wheel-rail contact plane defined by the track at a given location along the track. In addition or as an alternative, the fillet section may be configured as a function of a deformation of a wheel unit shaft connected to the rim section, the wheel unit shaft defining the rolling axis, and the deformation resulting from a nominal load of the rail vehicle. In addition or as an alternative, the fillet section may be configured as a function of a stiffness, in particular, a longitudinal stiffness (along a longitudinal direction of the rail vehicle), of a primary suspension device connecting the wheel unit to the rail vehicle. It will be appreciated that, in addition or as an alternative, any parameter of the track and/or the vehicle having an influence of the hunting motion and wear behavior of the wheel may be used in configuring the fillet section. In addition or as an alternative, at least a part of the fillet section located adjacent to the cylindrical contour section may continuously change its curvature along the rolling axis. These approaches, either alone or in arbitrary combination, allow achieving a particularly favorable wheel profile design which is tailor made to the intended use of the wheel unit within a particular rail vehicle to be operated on a particular track with a given track profile.

With preferred variants, the wheel profile section, in an unworn or re-profiled state, defines a flange thickness point, an inner active contact area, an inner active contact area width along the rolling axis, and an inner active contact area contour length. The flange thickness point is used to define a flange thickness along the rolling axis. Depending on the applicable standard for the rail vehicle, there may be different definitions for this flange thickness point. Typically, the flange thickness point is located at an outer side of the flange section at a radius which corresponds to a radius of the wheel profile section in the tread datum plane plus 10 mm. The inner active contact area is confined by the flange thickness point and the tread datum plane, wherein the inner active contact area contour length (i.e. the length of the inner active contact area along the sectional contour) is 105% to 120%, preferably 107% to 115%, more preferably 108% to 110%, of the inner active contact area width.

It will be appreciated that the inner active contact area contour length may vary depending on the track profile of the track on which the wheel is to be used. In particular, it may vary depending on the ratio of narrow curves (i.e. curves with a radius below a certain critical threshold) within the track.

Hence, with certain variants, the track may have a track profile with a ratio of curved sections of the track with curve radii of less than 1000 m, which is above 15%, preferably above 20%, more preferably above 25%. Here, the inner active contact area contour length may be 105% to 108%, preferably 105% to 107%, more preferably 105% to 106%, of the inner active contact area width. Hence, in these cases a wheel profile may be achieved which is particularly suitable for operation on tracks with (comparatively) many narrow curves.

In other cases, the track may have a track profile with a ratio of curved sections of the track with curve radii of less than 1000 m, which is below 15%, preferably below 10%, more preferably below 5%. Here, the inner active contact area contour length may be 108% to 120%, preferably 108% to 115%, more preferably 109% to 110%, of the inner active contact area width. Hence, in these cases a wheel profile may be achieved which is particularly suitable for operation on tracks with (comparatively) few curves as is typically the case for high speed tracks.

With many variants the flange thickness point is located in close proximity to a conical flange area of the flange section. The conical flange area faces the tread datum plane and defines a flange angle of the flange section. This flange angle typically may range from 65° to 75°, preferably from 67° to 72°, more preferably may be 70°. The wheel profile section defines a transition point, which is located at the end of the conical flange area that is located closer to the tread datum plane. At this transition point, the angle of inclination of a tangent to the sectional contour becomes smaller than the flange angle. It will be appreciated that, with certain variants (in general and irrespective of the overall design of the wheel), this transition point may replace the flange thickness point in defining the inner active contact area, the inner active contact area width, and the inner active contact area contour length as described above.

Hence, with preferred variants, the wheel profile section, in an unworn or re-profiled state, defines the above transition point, the inner active contact area, the inner active contact area width along the rolling axis, and the inner active contact area contour length. The inner active contact area, here, is confined by the transition point and the tread datum plane, wherein the inner active contact area contour length (i.e. the length of the inner active contact area along the sectional contour) is 105% to 120%, preferably 107% to 115%, more preferably 108% to 110%, of the inner active contact area width.

It will be appreciated that, again, the inner active contact area contour length may vary depending on the track profile of the track on which the wheel is to be used. In particular, it may vary depending on the ratio of narrow curves (i.e. curves with a radius below a certain critical threshold) within the track.

Hence, with certain variants, the track may have a track profile with a ratio of curved sections of the track with curve radii of less than 1000 m, which is above 15%, preferably above 20%, more preferably above 25%. Here, the inner active contact area contour length may be 105% to 108%, preferably 105% to 107%, more preferably 105% to 106%, of the inner active contact area width. Hence, in these cases a wheel profile may be achieved which is particularly suitable for operation on tracks with (comparatively) many narrow curves.

In other cases, the track may have a track profile with a ratio of curved sections of the track with curve radii of less than 1000 m, which is below 15%, preferably below 10%, more preferably below 5%. Here, the inner active contact area contour length may be 108% to 120%, preferably 108% to 115%, more preferably 109% to 110%, of the inner active contact area width. Hence, in these cases a wheel profile may be achieved which is particularly suitable for operation on tracks with (comparatively) few curves as is typically the case for high speed tracks.

With certain variants exhibiting favorably smooth operation on track switches, the wheel profile section, in an unworn or re-profiled state, has a first conical section located on an outer side of the rim section opposite to the flange section, the first conical section having an inner first end, an outer second end and a first inclination with respect to the rolling axis. The inner first end is located at a first distance from the tread datum plane, the first distance being 4% to 23%, preferably 4% to 15%, more preferably 4% to 8%, of the rim width. In addition or as an alternative, the first distance is 5 mm to 30 mm, preferably 5 mm to 20 mm, more preferably 5 mm to 10 mm. Additionally or as an alternative, the outer second end is located at a second distance from the tread datum plane, the second distance being 8% to 30%, preferably 11% to 26%, more preferably 15% to 22%, of the rim width. In addition or as an alternative, the second distance is 10 mm to 40 mm, preferably 15 mm to 35 mm, more preferably 20 mm to 30 mm. Additionally or as alternative, the first inclination is 1/45 to 1/15, preferably 1/43 to 1132, more preferably 1/40 to 1/35.

It will be appreciated that, basically, a single conical section may be sufficient to achieve the above effect of smooth track switch operation. With certain variants showing even better behavior, in particular better track switch operation, however, the wheel profile section, in an unworn or re-profiled state, has a second conical section located on an outer side of the first conical section opposite to the flange section, the second conical section having an inner third end, an outer fourth end and a second inclination with respect to the rolling axis, the inner third end, in particular, substantially coinciding with the outer second end of the first conical section. The inner third end is located at a third distance from the tread datum plane, the third distance being 8% to 30%, preferably 11% to 26%, more preferably 15% to 22%, of the rim width. In addition or as an alternative, the third distance is 10 mm to 40 mm, preferably 15 mm to 35 mm, more preferably 20 mm to 30 mm. Additionally or as an alternative, the outer fourth end is located at a fourth distance from the tread datum plane, the fourth distance is 33% to 48%, preferably 37% to 46%, more preferably 41% to 44%, of the rim width. In addition or as an alternative, the fourth distance is 45 mm to 65 mm, preferably 50 mm to 62 mm, more preferably 55 mm to 60 mm. Additionally or as an alternative, the second inclination is 1/25 to 1/8, preferably 1/20 to 1/9, more preferably 1/15 to 1110. Preferably, the second inclination is higher than the first inclination.

It will be appreciated that the wheel unit may be used for any desired nominal operating speed. Preferably, the wheel unit is configured for use at a nominal speed above 160 km/h, preferably above 180 km/h, more preferably above 200 km/h, more preferably above 250 km/h, more preferably above 300 km/h. Here, the above effects of statistically distributed wear are particularly advantageous.

It will be appreciated that, in principle, any desired wheel design may be used for the wheel unit, such as monolithic wheels or multi-component wheels. Typically, the wheel unit comprises a web section connecting the rim section to a hub section of the wheel unit. However, any other design may be used as well.

The present invention further relates to a wheel set comprising two wheel units according to the invention, wherein each of the two wheel units is configured to contact a rail of the track. It will be appreciated that the two wheel units of the wheel set are typically connected by a common wheel set shaft which preferably provides a torsionally rigid connection between the two wheel units, such that both wheel units rotate at the same speed. With other variants, however, it is also possible that this rotational speed coupling between the two wheel units is achieved by different means, such as e.g. a gear unit, to achieve the dynamic behavior of a wheel set.

The wheel units and the rails, in a state of the wheel set which is displaced along the rolling axis by 3 mm with respect to a nominally central position on the rails, define an equivalent conicity of the wheel set and the equivalent conicity preferably ranges from 0 to 1/100, preferably from 0 to 1/150, more preferably from 0 to 1/200. With certain variants, the track has a track profile with a ratio of curved sections of the track with curve radii of less than 1000 m, which is above 15%, preferably above 20%, more preferably above 25%. Here, the equivalent conicity may range from 0 to 1/100, preferably from 0 to 1/150, more preferably from 0 to 1/200. Hence, in these cases a wheel profile may be achieved which is particularly suitable for operation on tracks with (comparatively) many narrow curves.

With other variants, the track has a track profile with a ratio of curved sections of the track with curve radii of less than 1000 m, which is below 15%, preferably below 10%, more preferably below 5%. Here, the equivalent conicity may range from 0 to 1/200, preferably from 0 to 1/300, more preferably from 0 to 1/400. Hence, in these cases a wheel profile may be achieved which is particularly suitable for operation on tracks with (comparatively) few curves as is typically the case for high speed tracks.

The present invention further relates to a running gear for a rail vehicle, in particular, a high-speed rail vehicle, comprising at least one wheel set according to the invention. The present invention further relates to a rail vehicle, in particular, a high-speed rail vehicle, comprising a wagon body supported on at least one running gear according to the invention. Herewith, the variants and advantages of the present invention may be realized to the same extent, such that, insofar, reference is only made to the above explanations.

The present invention further relates to a method for designing a wheel unit. The wheel unit is configured for use in a rail vehicle having a nominal speed above 140 km/h, in particular, a high-speed rail vehicle, the wheel unit comprising a rim section. The method comprises specifying that the rim section defines a rolling axis of said wheel, a rim width along the rolling axis and a tread datum plane perpendicular to the rolling axis. The method further comprises specifying that the rim section has a sectional contour in a sectional plane comprising the rolling axis, the sectional contour comprising a wheel profile section with a flange section, a fillet section and a tread section, the tread section being configured to contact a rail of a track in a contact location during normal operation of the wheel unit. The method further comprises specifying that the tread section, in an unworn or re-profiled state, comprises a non-cylindrical contour section. The method further comprises specifying that the tread section, in an unworn or re-profiled state, further comprises a cylindrical contour section, the cylindrical contour section, along the rolling axis, having an inner end, an outer end and a cylindrical contour width between the inner end and the outer end, the cylindrical contour section, in particular, being located such that, along the rolling axis, one of the inner end and the outer end has an end distance from the tread datum plane which is at most 50% of the cylindrical contour width, the cylindrical contour section, in particular, intersecting the tread datum plane. The method further comprises specifying a geometry of the fillet section using a transfer function, the transfer function being created as a function of a geometry of the track, in particular a curve radius distribution along the track. In addition or as an alternative, the transfer function may be created as a function of a geometry of a rail head of the rail. In addition or as an alternative, the transfer function may be created as a function of an inclination of the rail, in particular, of a web of the rail, with respect to a wheel-rail contact plane defined by the track at a given location along the track. In addition or as an alternative, the transfer function may be created as a function of a deformation of a wheel unit shaft connected to the rim section, the wheel unit shaft defining the rolling axis, and the deformation resulting from a nominal load of the rail vehicle. In addition or as an alternative, the transfer function may be created as a function of a stiffness, in particular, a longitudinal stiffness, of a primary suspension device connecting the wheel unit to the rail vehicle. Here as well, these approaches, either alone or in arbitrary combination, allow achieving a particularly favorable wheel profile design which is tailor made to the intended use of the wheel unit within a particular rail vehicle to be operated on a particular track with a given track profile.

Further embodiments of the present invention will become apparent from the dependent claims and the following description of preferred embodiments which refers to the appended figures.

### BRIEF DESCRIPTION OF THE DRAWINGS

- Figure 1: is a highly schematic side view of a preferred embodiment of a rail vehicle according to the present invention with a preferred embodiment of a running gear unit according to the present invention comprising a preferred embodiment of a wheel set according to the present invention with a preferred embodiment of a wheel unit according to the present invention designed using a preferred embodiment of a design method according to the present invention.
- Figure 2: is a sectional view of a part of the wheel unit of Figure 1.
- Figure 3: is a table of the wheel unit profile coordinates of the wheel unit of Figure 1.
- Figure 4: is a diagram showing the evolution of the equivalent conicity over mileage for wheel set of Figure 1 compared to known wheel units.

### DETAILED DESCRIPTION OF THE INVENTION

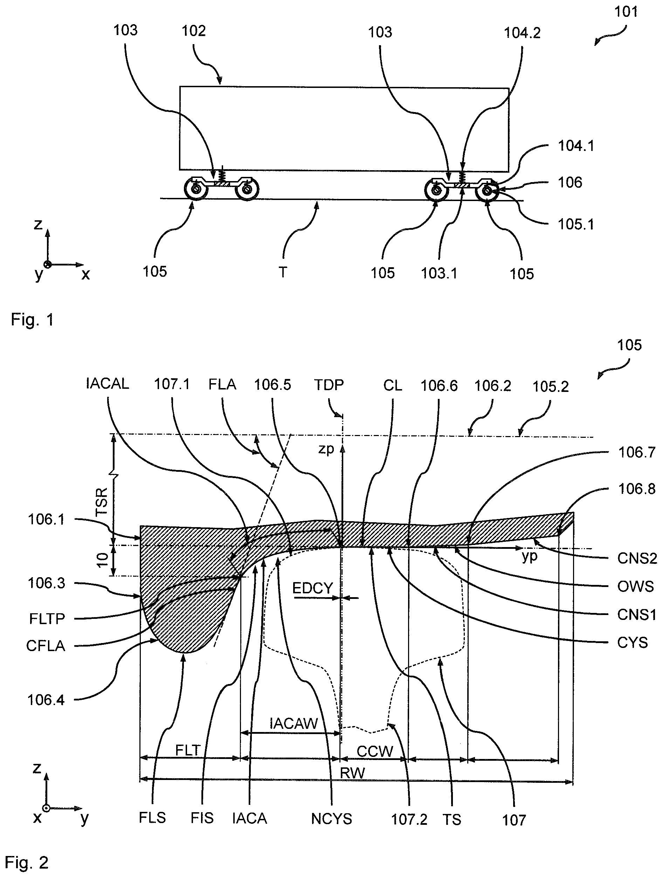

With reference to Figures 1 to 4 a preferred embodiment of a rail vehicle 101 according to the present invention will now be described in greater detail. The rail vehicle 101 (only shown in a highly schematic partially sectional manner in Figure 1) is a high speed rail vehicle with a nominal operating speed of 300 km/h and more.

In order to simplify the explanations given below, an xyz-coordinate system has been introduced into the Figures, wherein (on a straight, level track T) the x-axis designates the longitudinal direction of the rail vehicle 101, the y-axis designates the transverse direction of the rail vehicle 101, while the z-axis designates the height direction of the rail vehicle 101. It will be appreciated that all statements made in the following with respect to the position and orientation of components of the rail vehicle, unless otherwise stated, refer to a static situation with the rail vehicle 101 standing on a straight level track under nominal loading.

The vehicle 101 comprises a wagon body unit in the form of a wagon body 102 supported by a secondary suspension arrangement 104.2 on a running gear unit in the form of a bogie 103 with a bogie frame 103.1. The secondary suspension arrangement 104 is typically formed by two air springs located in a conventional manner at both lateral sides of the wagon body 102 and supporting the wagon body 102 on the bogie frame 103.1.

Each bogie 103 comprises two wheel sets 105 according to the present invention. The bogie frame 103.1 is supported on these wheel sets 105 via primary suspension arrangements in the form of primary springs 104.1. In the present example, the wheel sets 105 are internally supported, i.e. supported by bearings located between the longitudinal beams of the bogie frame 103.1. It will be appreciated however that, with other variants, any other support concept may be chosen, e.g. also a so called external support.

Each wheel set 105 comprises a preferred embodiment of a wheel unit according to the present invention formed by a wheel 106. It will be appreciated that the two wheels 106 of the respective wheel set 105, in the present variant, are connected by a common wheel set shaft 105.1 which provides a torsionally rigid connection between the two wheels 106, such that both wheels 106 rotate at the same speed about a rolling axis 105.2.

Figure 2 is a sectional view of a lower part of the wheel 106, more precisely, a part of a rim section 106.1 of the wheel 106, contacting a rail 107 of track T in a contact location CL during normal operation of the wheel 106 and the vehicle 101, respectively. It will be appreciated that any desired wheel design may be used for the wheel 106, such as monolithic wheels or multi-component wheels. In the present example, the wheel 106 comprises a web section (not shown in greater detail) connecting the rim section 106.1 to a hub section (not shown in greater detail) of the wheel 106, which is then connected to the wheel set shaft 105.1.

As can be seen from Figure 1 and 2, the rim section 106.1 of wheel 106 defines a rolling axis 106.2 of the wheel 106 (coinciding with the rolling axis 105.2 of the wheel set 105), a rim width RW along the rolling axis 106.2 and a tread datum plane TDP perpendicular to the rolling axis 106.2. The rim section 106.1 has a sectional contour 106.3 in a sectional plane comprising the rolling axis 106.2 (see drawing plane of Figure 2). The sectional contour 106.3 comprises a wheel profile section 106.4. The wheel profile section 106.4, from an inner side of the wheel 106 (facing the wheel set center) to an outer side of the wheel 106, comprises a flange section FLS, a fillet section FIS, a tread section TS, and an outer wheel section OWS.

The tread section TS configured to contact the rail 107 in a contact location CL. It will be appreciated that the contact location CL varies over time dependent on the dynamic loads acting on the vehicle 101 and the resulting lateral displacement (in the lateral direction, i.e. along the y axis). It will be further appreciated that the fillet section FIS partially overlaps the tread section TS. Hence, during normal operation, the part of the fillet section FIS overlapping the tread section TS also contacts the rail 107 (upon sufficient lateral displacement).

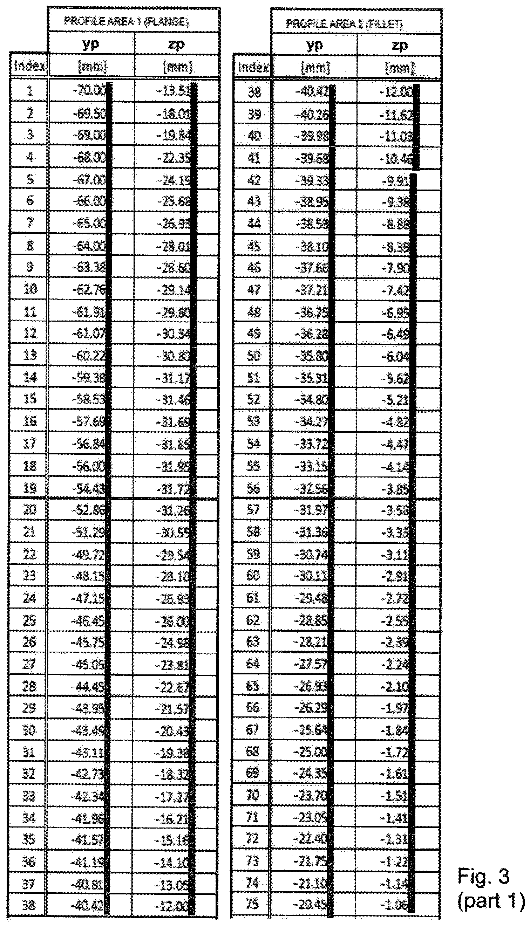

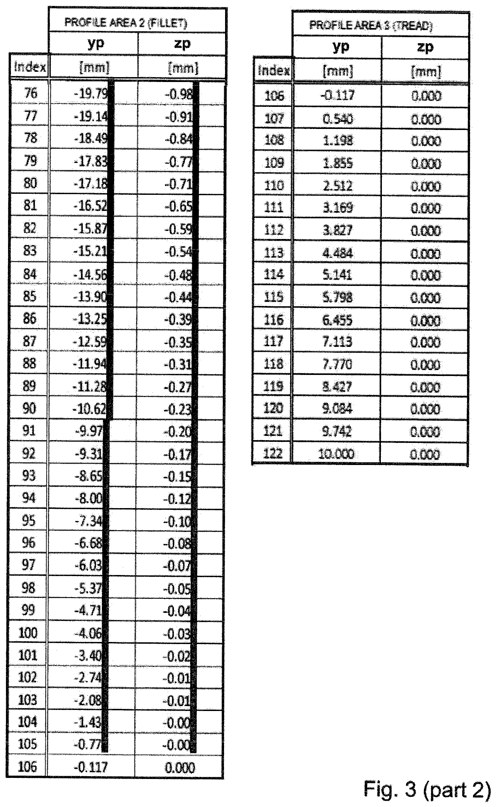

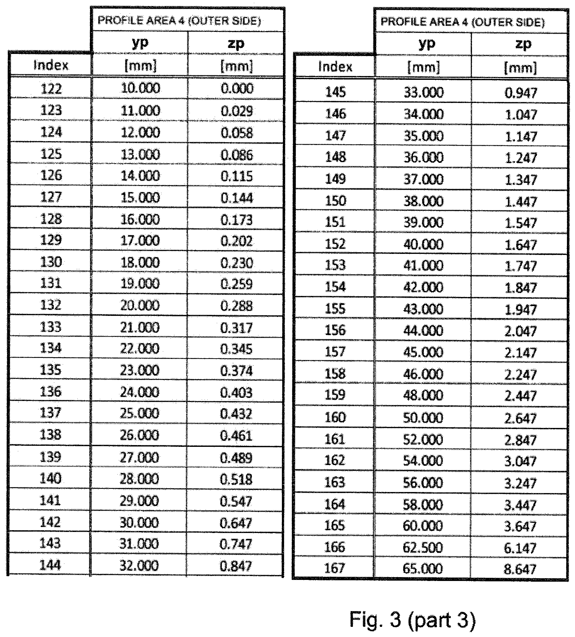

The tread section TS, in an unworn or re-profiled state, comprises a non-cylindrical contour section NCYS formed by the overlapping part of the fillet section FIS. The tread section TS, in an unworn or re-profiled state, further comprises a cylindrical contour section CYS located adjacent to the fillet section FIS. The cylindrical contour section CYS, along the rolling axis 106.2, has an inner end 106.5, an outer end 106.6 and a cylindrical contour width CCW between the inner end 106.5 and the outer end 106.6. The cylindrical contour section CYS is located such that, along the rolling axis 106.2, it intersects the tread datum plane TDP. The inner end 106.5 of the cylindrical contour section CYS is located between the flange section FLS and the tread datum plane TDP, wherein it has an end distance EDCY = 0.117 mm from the tread datum plane TDP (see also Figure 3).

However, in further preferred variants, the inner end 106.5 has an end distance EDCY from the tread datum plane TDP which is at most 50% of the cylindrical contour width. In other preferred variants, in particular as a function of the ratio between curved sections of the track T and straight sections of the track T on which the wheel set 105 is intended to run, any desired and suitable location may be chosen for the inner end 106.5 and the outer end 106.6 of the cylindrical contour section CYS and, hence, any suitable cylindrical contour width CCW may be chosen.

The end distance EDCY is about 1.2% of the cylindrical contour width CCW. However, in other preferred variants, the end distance EDCY may be 0% to 50%, preferably 10% to 40%, more preferably 20% to 30%, of the cylindrical contour width. In further preferred variants, the end distance EDCY may be 0 mm to 30 mm, preferably 5 mm to 25 mm, more preferably 5 mm to 10 mm. In further preferred variants, it is also possible that the outer end 106.6 of the cylindrical contour section CYS has the end distance EDCY from the tread datum plane TDP as described above.

In any of these cases particularly favorable indifferent contact location behavior and favorable indifferent wear behavior, respectively, may be achieved thanks to the cylindrical contour section CYS. As noted above, the cylindrical contour section CYS has the beneficial effect that, at least during operation of the vehicle 101 at its nominal speed on a straight level track T, a statistical distribution (over time) of the contact location CL along the rolling axis 106.2 prevails over the cylindrical contour section CYS. Moreover, with such a cylindrical contour section CYS, not least due to the statistical distribution of the contact location CL, an indifferent wear behavior with a statistical distribution of wear of the tread section TS along the rolling axis 106.2 prevails over the cylindrical contour section CYS.

In the present variant, the cylindrical contour width CCW is about 7.5% of a rim width RW of the rim section 106.1 along the rolling axis 106.2. However, in further preferred variants, the cylindrical contour width CCW may be at least 4%, preferably at least 7%, more preferably at least 10%, of the rim width RW. The cylindrical contour width CCW is 10.117 mm (see also Figure 3). However, in further preferred variants, the cylindrical contour width CWW may be at least 5 mm, preferably at least 10 mm, more preferably at least 15 mm. In further preferred variants, the cylindrical contour width CWW may be chosen to be at most 14%, preferably at most 16%, more preferably at most 18%, of the rim width RW. Finally, the cylindrical contour width CWW may be chosen to be at most 20 mm, preferably at most 22 mm, more preferably at most 25 mm. With any of the above width dimensions of the cylindrical contour section CYS particularly favorable indifferent contact location behavior and a favorable indifferent wear behavior, respectively, may be achieved over a sufficiently large cylindrical contour section CYS.

It will be appreciated that the cylindrical contour section CYS does not have to be perfectly cylindrical. Hence, with favorable configurations still exhibiting suitably indifferent behavior, the geometry of the cylindrical contour section CYS is kept within certain favorable tolerances. These tolerances may depend on either of the material or material combination of the wheel 106 and the mating rail 107, the track profile of the track T (on which the wheel 106 is to be used), the operational parameters of the vehicle 101 (in particular, nominal load, nominal speed etc.), manufacturing tolerances or any other parameter of noticeable influence as well as any combinations of these parameters.

In the present example, the cylindrical contour section CYS, over the cylindrical contour width CCW, has a deviation CYD from an ideally cylindrical contour ICC. The deviation CYD is such that a local inclination LIC with respect to the ideally cylindrical contour ICC is less than 1/200. In other preferred variants, in addition or as an alternative, the cylindrical contour section CYS, over the cylindrical contour width CCW, may have a deviation CYD from the ideally cylindrical contour ICC is such that the local inclination with respect to the ideally cylindrical contour ICC is less than 1/250, more preferably less than 1/300.

In the present example, the cylindrical contour section CYS is a continuous section along the rolling axis 106.2. It will be appreciated that, with certain variants, two or more cylindrical areas of the cylindrical contour section CYS may be separated by (one or more) slightly non-cylindrical spaces, as long as the above indifferent contact loaction behavior and/or the above indifferent wear behavior is still substantially achieved over the cylindrical contour section CYS.

It will be appreciated that, apart from the cylindrical contour section CYS, basically any desired and suitable wheel profile section geometry may be chosen. In the present example, the wheel profile section comprises the partially curved fillet section, which is configured such that, at least in an unworn or re-profiled state, upon a (sufficiently large) lateral displacement LD of the rim section 106.1 on the rail 107 along the rolling axis105.2 during normal operation, the contact location CL continuously shifts over the fillet section FIS. By this means, particularly favorable wear behavior as well as particularly favorable curve behavior is achieved for the wheel set 105.

The fillet section FIS is further configured such that, at least in an unworn or re-profiled state, upon a lateral displacement LD of the rim section 106.1 on the rail 107 along the rolling axis 105.2 at any time during normal operation on a straight track, the contact location CL forms the single coherent contact location between the rim section 106.1 and the rail 107. By this means as well, particularly favorable wear behavior as well as particularly favorable curve behavior may is achieved for the wheel set 105.

In the present example, the above continuous shift of the contact location CL and the single coherent contact location behavior are achieved in that at least a part of the fillet section FIS located adjacent to the cylindrical contour section CYS continuously changes its curvature along the rolling axis 105.2.

In the present example, the fillet section FIS has been configured as a function of a geometry of the particular track T on which the wheel 106 is intended to be operated. In particular, the fillet section FIS has been configured as a function of a curve radius distribution CRD along the track T. Also, the fillet section FIS has been configured as a function of a geometry of the rail head 107.1 of the rail 107. Additionally, the fillet section FIS has been configured as a function of an inclination of the rail 107, in particular, as a function of the web 107.2 of the rail 107, with respect to a wheel-to-rail contact plane WRCP defined by the track T at a given location along the track T. The fillet section FIS has further been configured as a function of the deformation of the wheel set shaft 105.1 resulting from a nominal load of the rail vehicle 101. This design approach allows achieving a particularly favorable wheel profile design which is tailor made to the intended use of the wheel 106 within the rail vehicle 101 to be operated on the track T with a given track profile TP.

The wheel profile section 106.4, in an unworn or re-profiled state, defines a flange thickness point FLTP used to define a flange thickness FLT along the rolling axis 106.2. Depending on the applicable standard for the rail vehicle 101, there may be different definitions or locations, respectively, which are applicable for this flange thickness point FLTP. Typically, the flange thickness point FLTP is located at an outer side of the flange section FLS at a radius which corresponds to a radius of the wheel profile section in the tread datum plane plus 10 mm (as shown in Figure 2).

The wheel profile section 106.4, in such an unworn or re-profiled state, further defines an inner active contact area IACA, an inner active contact area width IACAW along the rolling axis 106.2, and an inner active contact area contour length IACAL. The inner active contact area contour length IACAL is the length of the inner active contact area IACA along the sectional contour 106.3. The inner active contact area IACA is confined by the flange thickness point FLTP and the tread datum plane TDP. The inner active contact area contour length IACAL, in the present example, is 109.5%, of the inner active contact area width IACAW. With other variants, the inner active contact area contour length IACAL may be 105% to 120%, preferably 107% to 115%, more preferably 108% to 110%, of the inner active contact area width IACAW.

It will be appreciated that the inner active contact area contour length IACAL may vary depending on the track profile TP of the track T on which the wheel 106 is to be used. In particular, it may vary depending on the ratio of narrow curves (i.e. curves with a radius below a certain critical threshold) within the track T.

Hence, with certain variants, the track T may have a track profile TP with a ratio of curved sections of the track with curve radii of less than 1000 m, which is above 15%, preferably above 20%, more preferably above 25%. Here, the inner active contact area contour length IACAL may be 105% to 108%, preferably 105% to 107%, more preferably 105% to 106%, of the inner active contact area width. Hence, in these cases a wheel profile may be achieved which is particularly suitable for operation on tracks T with (comparatively) many narrow curves.

In other cases, as with the present example, the track T may have a track profile TP with a ratio of curved sections of the track T with curve radii of less than 1000 m, which is below 15%, preferably below 10%, more preferably below 5%. Here, the inner active contact area contour length IACAL may be 108% to 120%, preferably 108% to 115%, more preferably 109% to 110%, of the inner active contact area width IACAW. Hence, in these cases a wheel profile may be achieved which is particularly suitable for operation on tracks with (comparatively) few curves as is typically the case for high speed tracks, like the track T on which the vehicle 101 is to be used.

As can be seen from Figure 2, the flange thickness point FLTP, in the present example, is located in close proximity to a conical flange area CFLA of said flange section FLS. The conical flange area CFLA faces the tread datum plane TDP and defines a flange angle FLA of the flange section FLS. This flange angle FLA typically may range from 65° to 75°, preferably from 67° to 72°, more preferably may be 70°. At a transition point, which is located at the end of the conical flange area CFLA that is located closer to the tread datum plane TDP (than the other end of the conical flange area CFLA), the angle of inclination of a tangent to the sectional contour 106.3 becomes smaller than the flange angle FLA. It will be appreciated that, with certain variants (in general and irrespective of the overall design of the wheel 106), this transition point may replace the flange thickness point in defining the inner active contact area IACA, the inner active contact area width IACAW, and the inner active contact area contour length IACAL as described above.

To exhibit favorably smooth operation on track switches of the track T, the wheel profile section 106.4 of the present example, in an unworn or re-profiled state, has a first conical section CNS1 of the outer wheel section OWS, which is located on an outer side of the rim section 106.1 opposite to the flange section FLS. The first conical section CNS1 has an inner first end coinciding with the outer end 106.6 of the cylindrical contour section CYS, an outer second end 106.7 and a first inclination INC1 with respect to the rolling axis 106.2. The inner first end 106.6 is located at a first distance D1 = 11 mm from the tread datum plane TDP. It will be appreciated that, with other variants, the first distance D1 may be 4% to 23%, preferably 4% to 15%, more preferably 4% to 8%, of the rim width RW. In addition or as an alternative, the first distance D1 may be 5 mm to 30 mm, preferably 5 mm to 20 mm, more preferably 5 mm to 10 mm.

Furthermore, the outer second end 106.7 is located at a second distance D2 = 29 mm from the tread datum plane TDP. It will be appreciated that, with further variants, the second distance D2 may be 8% to 30%, preferably 11% to 26%, more preferably 15% to 22%, of the rim width RW. In addition or as an alternative, the second distance D2 may be 10 mm to 40 mm, preferably 15 mm to 35 mm, more preferably 20 mm to 30 mm. Moreover, the first inclination may be 1/45 to 1115, preferably 1/43 to 1/32, more preferably 1/40 to 1/35.

It will be appreciated that, basically, a single conical section CNS1 may be sufficient to achieve the above effect of smooth track switch operation. The present example, however, shows even better behavior, in particular better track switch operation, since the wheel profile section 106.4, in an unworn or re-profiled state, has a second conical section CNS2 located on the outer side of the first conical section CNS1 opposite to the flange section FLS. The second conical section CNS2 has an inner third end coinciding with the outer end 106.7 of the first conical section CNS1, an outer fourth end 106.8 and a second inclination INC2 with respect to the rolling axis 106.2.

The inner third end 106.7 end is located at a third distance D3 = D2 = 29 mm from the tread datum plane TDP. It will be appreciated that, with further variants, the third distance may be 8% to 30%, preferably 11% to 26%, more preferably 15% to 22%, of the rim width RW. In addition or as an alternative, the third distance may be 10 mm to 40 mm, preferably 15 mm to 35 mm, more preferably 20 mm to 30 mm. Additionally or as an alternative, the outer fourth end 106.8 is located at a fourth distance D4 from the tread datum plane D4, the fourth distance may be 33% to 48%, preferably 37% to 46%, more preferably 41% to 44%, of the rim width RW. In addition or as an alternative, the fourth distance may be 45 mm to 65 mm, preferably 50 mm to 62 mm, more preferably 55 mm to 60 mm. Moreover, the second inclination INC2 is 1/25 to 1/8, preferably 1/20 to 1/9, more preferably 1/15 to 1/10. Preferably, the second inclination is higher than the first inclination.

In the present example, the wheels 106 of the respective wheel set 105 and the rails 107 of the track T, in a state of the wheel set 105 which is displaced along the rolling axis 105.2, 106.2 (i.e. along the y axis) by 3 mm with respect to a nominally central position (as shown in Figure 2) on the rails 107 of the track T, define an equivalent conicity EQC of the wheel set 105. This equivalent conicity EQC, in the present example, is substantially EQC = 0. It will be appreciated that, with other variants, the equivalent conicity EQC preferably ranges from 0 to 1/100, preferably from 0 to 1/150, more preferably from 0 to 1/200.

With certain variants, the track T has a track profile TP with a ratio of curved sections of the track T with curve radii of less than 1000 m, which is above 15%, preferably above 20%, more preferably above 25%. Here, the equivalent conicity EQC may range from 0 to 1/100, preferably from 0 to 1/150, more preferably from 0 to 1/200. Hence, in these cases a wheel profile may be achieved which is particularly suitable for operation on tracks with (comparatively) many narrow curves.

With other variants, as with the present example, the track T has a track profile TP with a ratio of curved sections of the track T with curve radii of less than 1000 m, which is below 15%, preferably below 10%, more preferably below 5%Here, the equivalent conicity EQC may range from 0 to 1/200, preferably from 0 to 1/300, more preferably from 0 to 1/400. Hence, in these cases a wheel profile may be achieved which is particularly suitable for operation on tracks T with (comparatively) few curves as is typically the case for high speed tracks, like the track T on which the vehicle 101 is to be used..

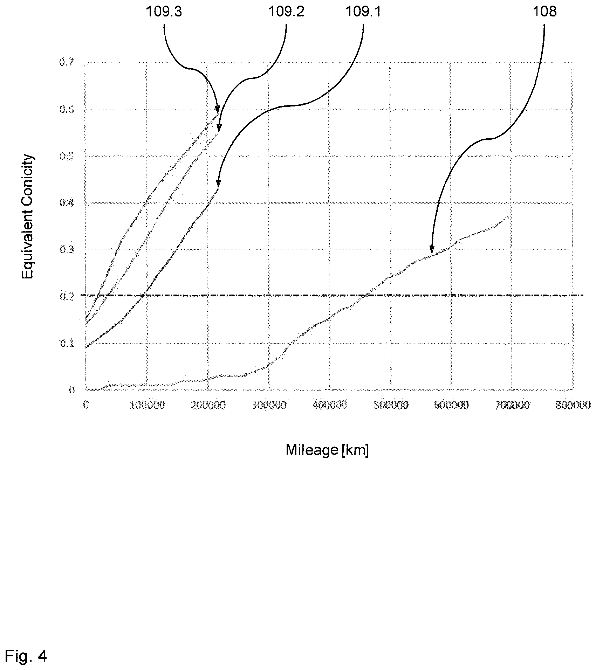

As noted, Figure 3 gives the coordinate pairs (yp;zp) of the wheel profile section 106.4 of the wheels 106 of the present example in the yp, zp coordinate system as shown in Figure 2. The advantages of the present invention become readily apparent from Figure 4, showing the equivalent conicity curve 108 for the simulated development of the equivalent conicity EQC over the mileage for the wheel set 105 and the corresponding equivalent conicity curves 109.1 to 109.3 of three comparison wheel sets. The equivalent conicity curves 109.1 and 109.2 were determined for variants of the known "S1002" profile, namely "S1002e315" and "S1002 e325", while the equivalent conicity curve 109.3 was determined for a variant of the known "EPS" profile, namely "EPS e305".

As can be clearly seen from Figure 4, thanks to the improved, indifferent contact behavior and wear behavior, respectively, the equivalent conicity EQC of wheel set 105 has a way lower increase over the mileage than the known wheel profile designs. More precisely, the simulated equivalent conicity EQC of the wheel set 105 stays well below the critical threshold of 0.2 (for a high speed rail vehicle as vehicle 101) well beyond a mileage of 400,000 km. This reduced increase in the equivalent conicity leads to a long term driving stability and considerably longer re-profiling intervals.

The wheel profile of the present example has been designed using a preferred embodiment of the method according to the invention. The method comprises specifying the components of the wheel unit such as the rim section 106.1, in particular the general dimensions of the rim section 106.1, such as the rim width RW and the radius TSR at the tread datum plane TDP.

The method further comprises specifying that the rim section 106.1 has a sectional contour in the wheel profile section 106.4 with a flange section FLS, a fillet section FIS and a tread section TS configured to contact a rail 107 of track T in the contact location CL during normal operation of the wheel 106.

The method further comprises specifying that the tread section TS, in an unworn or re-profiled state, comprises a non-cylindrical contour section NCYS and cylindrical contour section CYS, wherein the cylindrical contour section, along the rolling axis 106.2, has an inner end 106.6, an outer end 106.6 and a cylindrical contour width CCW between the inner end 106.6 and the outer end 106.6. The method, in particular, further comprises specifying that the cylindrical contour section CYS is located such that, along the rolling axis 106.2, one of the inner end 106.6 and the outer end 106.6 has an end distance EDCY from the tread datum plane TDP which is at most 50% of the cylindrical contour width. The method may further comprise specifying that the cylindrical contour section intersects the tread datum plane TDP.

The method further comprises specifying a geometry of the fillet section FIS using a transfer function TF. With such a transfer function, the influences of the track T on the dynamic loads and the resulting wear behavior can be simulated and properly considered when designing the wheel profile of the wheels 106.

In the present example, the transfer function TF is created as a function of a geometry of the track T, in particular a curve radius distribution along the track T. In addition, the transfer function TF is created as a function of a geometry of a rail head 107.1 of the rail 107. In addition, the transfer function TF is created as a function of an inclination of the rail 107, in particular, of a web 107.2 of the rail 107, with respect to a wheel-rail contact plane WRCP defined by the track T at a given location along the track T. In addition, the transfer function TF is created as a function of a deformation of the wheel shaft 105.2 connecting the wheels 106 and, hence, their rim sections 106.1, the deformation resulting from a nominal load of the rail vehicle 101. In addition, the transfer function may be created as a function of a stiffness, in particular, the longitudinal stiffness along the longitudinal direction (x axis) of the rail vehicle 101, of the primary suspension device 104.1. Herewith a particularly favorable wheel profile design which is tailor made to the intended use of the wheels 106 and the wheel set 105 within a particular rail vehicle 101 to be operated on a particular track T with a given track profile TP.

The present invention, in the foregoing, has only been described in the context of a specific high speed rail vehicle. It will be appreciated, however, that it may also be used in the context of any other rail vehicle operated at different nominal speeds, in particular, any rail vehicle operated at a nominal speed of 140 km/h and above.

## Claims

1. A wheel unit for a rail vehicle having a nominal speed above 140 km/h, in particular, a high-speed rail vehicle, said wheel unit comprising a rim section, wherein
- said rim section (106.1) defines a rolling axis (106.2) of said wheel 106, a rim width along said rolling axis (106.2) and a tread datum plane perpendicular to said rolling axis (106.2),
- said rim section (106.1) has a sectional contour (106.3) in a sectional plane comprising said rolling axis (106.2),
- said sectional contour (106.3) comprises a wheel profile section (106.4),
- said wheel profile section (106.4) comprises a flange section and a tread section,
- said tread section is configured to contact a rail (107) of a track in a contact location during normal operation of said wheel unit;
- said tread section, in an unworn or re-profiled state, comprises a non-cylindrical contour section;
**characterized in that**
- said tread section, in said unworn or re-profiled state, further comprises a cylindrical contour section;
- said cylindrical contour section, along said rolling axis (106.2), has an inner end (106.5), an outer end (106.6) and a cylindrical contour width between said inner end (106.5) and said outer end (106.6);
- said cylindrical contour section is located such that, along said rolling axis (106.2), one of said inner end (106.5) and said outer end (106.6) has an end distance from said tread datum plane which is at most 50% of said cylindrical contour width, said cylindrical contour section intersecting said tread datum plane.

2. The wheel unit according to claim 1, wherein
- said end distance is 0% to 50%, preferably 10% to 40%, more preferably 20% to 30%, of said cylindrical contour width;
and/or
- said end distance is 0 mm to 30 mm, preferably 5 mm to 25 mm, more preferably 5 mm to 10 mm;
and/or
- said inner end (106.5) has said end distance from said tread datum plane; and/or
- said inner end (106.5) is located between said flange section and said tread datum plane.

3. The wheel unit according to claim 1 or 2, wherein
- said cylindrical contour width is at least 4%, preferably at least 7%, more preferably at least 10%, of said rim width;
and/or
- said cylindrical contour width is at least 5 mm, preferably at least 10 mm, more preferably at least 15 mm;
and/or
- said cylindrical contour width is at most 14%, preferably at most 16%, more preferably at most 18%, of said rim width;
and/or
- said cylindrical contour width is at most 20 mm, preferably at most 22 mm, more preferably at most 25 mm;

4. The wheel unit according to claim 3, wherein
- said cylindrical contour section, over said cylindrical contour width, has a deviation from an ideally cylindrical contour, wherein
- said deviation is such that a local inclination of said cylindrical contour section with respect to said ideally cylindrical contour is less than 1/200, preferably less than 11250, more preferably less than 1/300.

5. The wheel unit according to any one of claims 1 to 4, wherein
- said cylindrical contour section is configured such that, at least during operation at said nominal speed on a straight level track, an indifferent contact point behavior with a statistical distribution of said contact location along said rolling axis (106.2) prevails over said cylindrical contour section;
and/or
- said cylindrical contour section is configured such that, at least during operation at said nominal speed on a straight level track, an indifferent wear behavior with a statistical distribution of wear of said tread section along said rolling axis (106.2) prevails over said cylindrical contour section.

6. The wheel unit according to any one of claims 1 to 5, wherein
- said wheel profile section (106.4) comprises an at least partially curved fillet section located between said flange section and said inner end (106.5) of said cylindrical contour section;
wherein
- said fillet section is configured such that, at least in said unworn or re-profiled state, upon a lateral displacement of said rim section (106.1) on said rail (107) along said rolling axis (106.2) during normal operation, said contact location continuously shifts over said fillet section;
and/or
- said fillet section is configured such that, at least in said an unworn or re-profiled state, upon a lateral displacement of said rim section (106.1) on said rail (107) along said rolling axis (106.2) at any time during normal operation on a straight track, said contact location forms the single coherent contact location between said rim section (106.1) and said rail (107).

7. The wheel unit according to claim 6, wherein
- said fillet section is configured as a function of a geometry of said track, in particular a curve radius distribution along said track,
and/or
- said fillet section is configured as a function of a geometry of a rail head (107.1) of said rail (107);
and/or
- said fillet section is configured as a function of an inclination of said rail (107), in particular, of a web (107.2) of said rail (107), with respect to a wheel-rail contact plane defined by said track at a given location along said track;
and/or
- said fillet section is configured as a function of a deformation of a wheel unit shaft (105.1) connected to said rim section (106.1), said wheel unit shaft (105.1) defining said rolling axis (106.2), and said deformation resulting from a nominal load of said rail vehicle (101).
and/or
- said fillet section is configured as a function of a stiffness, in particular, a longitudinal stiffness, of a primary suspension device connecting said wheel unit to said rail vehicle (101).
and/or
- at least a part of said fillet section located adjacent to said cylindrical contour section continuously changes its curvature along said rolling axis (106.2).

8. The wheel unit according to any one of claims 1 to 7, wherein
- said wheel profile section (106.4), in said unworn or re-profiled state, defines a flange thickness point and/or a transition point, an inner active contact area, an inner active contact area width along said rolling axis (106.2), and an inner active contact area contour length;
- said flange thickness point is used to define a flange thickness along said rolling axis (106.2); said flange thickness point, in particular, being located at an outer side of said flange section at a radius which corresponds to a radius of said wheel profile section (106.4) in said tread datum plane plus 10 mm;
- said transition point is located at the end of a conical flange area that is located closer to said tread datum plane;
- said inner active contact area is confined by said flange thickness point or said transition point and by said tread datum plane;
- said inner active contact area contour length is 105% to 120%, preferably 107% to 115%, more preferably 108% to 110%, of said inner active contact area width.

9. The wheel unit according to any one of claims 1 to 8, wherein
- said wheel profile section (106.4), in said unworn or re-profiled state, has a first conical section located on an outer side of said rim section (106.1) opposite to said flange section, said first conical section having an inner first end (106.6), an outer second end (106.7) and a first inclination with respect to said rolling axis (106.2);
wherein
- said inner first end (106.6) is located at a first distance from said tread datum plane, said first distance being 4% to 23%, preferably 4% to 15%, more preferably 4% to 8%, of said rim width and/or said first distance being 5 mm to 30 mm, preferably 5 mm to 20 mm, more preferably 5 mm to 10 mm;
and/or
- said outer second end (106.7) is located at a second distance from said tread datum plane, said second distance being 8% to 30%, preferably 11% to 26%, more preferably 15% to 22%, of said rim width and/or said second distance being 10 mm to 40 mm, preferably 15 mm to 35 mm, more preferably 20 mm to 30 mm;
and/or
- said first inclination is 1/45 to 1/15, preferably 1/43 to 1/32, more preferably 1/40 to 1/35.

10. The wheel unit according to claim 9, wherein
- said wheel profile section (106.4) , in said unworn or re-profiled state, has a second conical section located on an outer side of said first conical section opposite to said flange section, said second conical section having an inner third end (106.7), an outer fourth end (106.8) and a second inclination with respect to said rolling axis (106.2), said inner third end (106.7), in particular, substantially coinciding with said outer second end (106.7) of said first conical section;
wherein
- said inner third end (106.7) is located at a third distance from said tread datum plane, said third distance being 8% to 30%, preferably 11% to 26%, more preferably 15% to 22%, of said rim width and/or said third distance being 10 mm to 40 mm, preferably 15 mm to 35 mm, more preferably 20 mm to 30 mm;
and/or
- said outer fourth end (106.8) is located at a fourth distance from said tread datum plane, said fourth distance being 33% to 48%, preferably 37% to 46%, more preferably 41% to 44%, of said rim width and/or said fourth distance being 45 mm to 65 mm, preferably 50 mm to 62 mm, more preferably 55 mm to 60 mm;
and/or
- said second inclination is 1/25 to 1/8, preferably 1/20 to 1/9, more preferably 1/15 to 1110.
and/or
- said second inclination is higher than said first inclination.

11. The wheel unit according to any one of claims 1 to 10, wherein it is configured for use at a nominal speed above 180 km/h, preferably above 200 km/h, more preferably above 250 km/h, more preferably above 300 km/h.

12. An arrangement with a wheel set comprising two wheel units according to any one of claims 1 to 11 and a track, wherein
- each of said two wheel units is configured to contact a rail (107) of said track;
- said wheel units and said rails (107), in a state of said wheel set (105) which is displaced along said rolling axis (106.2) by 3 mm with respect to a nominally central position on said rails (107), define an equivalent conicity of said wheel set (105); and
- said equivalent conicity, in particular, ranges from 0 to 1/100, preferably from 0 to 1/150, more preferably from 0 to 1/200,
wherein
- said track, in particular, has a track profile with a ratio of curved sections of said track with curve radii of less than 1000 m, which is above 15%, preferably above 20%, more preferably above 25%, and said equivalent conicity ranges from 0 to 1/100, preferably from 0 to 1/150, more preferably from 0 to 1/200;
or
- said track, in particular, has a track profile with a ratio of curved sections of said track with curve radii of less than 1000 m, which is below 15%, preferably below 10%, more preferably below 5%, and said equivalent conicity ranges from 0 to 1/200, preferably from 0 to 1/300, more preferably from 0 to 1/400.

13. The arrangement of claim 12, wherein
- each of said two wheel units is a wheel unit according to claim 8, and
wherein
- said track, in particular, has a track profile with a ratio of curved sections of said track with curve radii of less than 1000 m, which is above 15%, preferably above 20%, more preferably above 25%, and said inner active contact area contour length is 105% to 108%, preferably 105% to 107%, more preferably 105% to 106%, of said inner active contact area width
or
- said track, in particular, has a track profile with a ratio of curved sections of said track with curve radii of less than 1000 m, which is below 15%, preferably below 10%, more preferably below 5%, and said inner active contact area contour length is 108% to 120%, preferably 108% to 115%, more preferably 109% to 110%, of said inner active contact area width.

14. A running gear for a rail vehicle, in particular, a high-speed rail vehicle, comprising at least one wheel set (105) comprising two wheel units according to any one of claims 1 to 11.

15. A rail vehicle, in particular, a high-speed rail vehicle, comprising a wagon body (102) supported on at least one running gear according to claim 14.

16. A method for designing a wheel unit according to any one of claims 1 to 11, said wheel unit being configured for use in a rail vehicle having a nominal speed above 140 km/h, in particular, a high-speed rail vehicle, said wheel unit comprising a rim section (106.1), said method comprising:
- specifying that said rim section (106.1) defines a rolling axis (106.2) of said wheel (106), a rim width along said rolling axis (106.2) and a tread datum plane perpendicular to said rolling axis (106.2)
- specifying that said rim section (106.1) has a sectional contour in a sectional plane comprising said rolling axis (106.2), said sectional contour comprising a wheel profile section (106.4) with a flange section, a fillet section and a tread section, said tread section being configured to contact a rail (107) of a track in a contact location during normal operation of said wheel unit;
- specifying that said tread section, in an unworn or re-profiled state, comprises a non-cylindrical contour section;
**characterized by**
- specifying that said tread section, in said unworn or re-profiled state, further comprises a cylindrical contour section, said cylindrical contour section, along said rolling axis (106.2), having an inner end (106.5), an outer end (106.6) and a cylindrical contour width between said inner end (106.5) and said outer end (106.6); said cylindrical contour section, in particular, being located such that, along said rolling axis (106.2), one of said inner end (106.5) and said outer end (106.6) has an end distance from said tread datum plane which is at most 50% of said cylindrical contour width, said cylindrical contour section, in particular, intersecting said tread datum plane; and
- specifying a geometry of said fillet section using a transfer function, said transfer function being created as a function of a geometry of said track, in particular a curve radius distribution along said track, and/or as a function of a geometry of a rail head (107.1) of said rail (107), and/or as a function of an inclination of said rail (107), in particular, of a web (107.2) of said rail (107), with respect to a wheel-rail contact plane defined by said track at a given location along said track, and/or as a function of a deformation of a wheel unit shaft (105.1) connected to said rim section (106.1), said wheel unit shaft (105.1) defining said rolling axis (106.2), and said deformation resulting from a nominal load of said rail vehicle (101) and/or as a function of a stiffness, in particular, a longitudinal stiffness, of a primary suspension device (104.1) connecting said wheel unit to said rail vehicle (101).

## Patentansprüche

1. Radeinheit für ein Schienenfahrzeug mit einer Nenngeschwindigkeit über 140 km/h, insbesondere ein Hochgeschwindigkeits-Schienenfahrzeug, wobei die Radeinheit einen Felgenabschnitt aufweist, wobei
- der Felgenabschnitt (106.1) eine Rollachse (106.2) des Rades 106, eine Felgenbreite entlang der Rollachse (106.2) und eine Laufflächenbezugsebene senkrecht zur Rollachse (106.2) definiert,
- der Felgenabschnitt (106.1) eine Schnittkontur (106.3) in einer Schnittebene aufweist, welche die Rollachse (106.2) umfasst,
- die Schnittkontur (106.3) einen Radprofilabschnitt (106.4) umfasst,
- der Radprofilabschnitt (106.4) einen Spurkranzabschnitt und einen Laufflächenabschnitt umfasst,
- der Laufflächenabschnitt dazu ausgebildet ist, während normalem Betrieb der Radeinheit eine Schiene (107) einer Spur an einer Kontaktstelle zu berühren;
- der Laufflächenabschnitt, in einem unverschlissenen oder neu profilierten Zustand, einen nicht-zylindrischen Konturabschnitt umfasst;
**dadurch gekennzeichnet, dass**
- der Laufflächenabschnitt, in dem unverschlissenen oder neu profilierten Zustand, ferner einen zylindrischen Konturabschnitt umfasst;
- der zylindrische Konturabschnitt, entlang der Rollachse (106.2), ein inneres Ende (106.5), ein äußeres Ende (106.6) und eine zylindrische Konturbreite zwischen dem inneren Ende (106.5) und dem äußeren Ende (106.6) aufweist;
- der zylindrische Konturabschnitt derart angeordnet ist, dass entlang der Rollachse (106.2) eines von dem inneren Ende (106.5) und dem äußeren Ende (106.6) einen Endabstand von der Laufflächenbezugsebene aufweist, der höchstens 50% der zylindrischen Konturbreite beträgt, wobei der zylindrische Konturabschnitt die Laufflächenbezugsebene schneidet.

2. Radeinheit nach Anspruch 1, wobei
- der Endabstand 0 % bis 50 %, vorzugsweise 10 % bis 40 %, weiter vorzugsweise 20 % bis 30 %, der zylindrischen Konturbreite beträgt;
und/oder
- der Endabstand 0 mm bis 30 mm, vorzugsweise 5 mm bis 25 mm, weiter vorzugsweise 5 mm bis 10 mm beträgt;
und/oder
- das innere Ende (106.5) den Endabstand von der Laufflächenbezugsebene aufweist;
und/oder
- das innere Ende (106.5) zwischen dem Spurkranzabschnitt und der Laufflächenbezugsebene angeordnet ist.

3. Radeinheit nach Anspruch 1 oder 2, wobei
- die zylindrische Konturbreite wenigstens 4 %, vorzugsweise wenigstens 7 %, weiter vorzugsweise wenigstens 10 %, der Felgenbreite beträgt;
und/oder
- die zylindrische Konturbreite wenigstens 5 mm, vorzugsweise wenigstens 10 mm, weiter vorzugsweise wenigstens 15 mm beträgt;
und/oder
- die zylindrische Konturbreite höchstens 14 %, vorzugsweise höchstens 16 %, weiter vorzugsweise höchstens 18 % der Felgenbreite beträgt;
und/oder
- die zylindrische Konturbreite höchstens 20 mm, vorzugsweise höchstens 22 mm, weiter vorzugsweise höchstens 25 mm beträgt.

4. Radeinheit nach Anspruch 3, wobei
- der zylindrische Konturabschnitt, über die zylindrische Konturbreite, eine Abweichung von einer ideal-zylindrischen Kontur aufweist, wobei
- die Abweichung derart ist, dass eine lokale Neigung des zylindrischen Konturabschnitts in Bezug auf die ideal-zylindrische Kontur weniger als 1/200, vorzugsweise weniger als 1/250, weiter vorzugsweise weniger als 1/300 beträgt.

5. Radeinheit nach einem der Ansprüche 1 bis 4, wobei
- der zylindrische Konturabschnitt derart ausgebildet ist, dass wenigstens während des Betriebs mit der Nenngeschwindigkeit auf einer geraden, ebenen Spur ein indifferentes Kontaktpunktverhalten mit einer statistischen Verteilung der Kontaktstelle entlang der Rollachse (106.2) über den zylindrischen Konturabschnitt vorherrscht;
und/oder
- der zylindrische Konturabschnitt derart ausgebildet ist, dass wenigstens während des Betriebs mit der Nenngeschwindigkeit auf einer geraden ebenen Spur ein indifferentes Verschleißverhalten mit einer statistischen Verteilung des Verschleißes des Laufflächenabschnitts entlang der Rollachse (106.2) über den zylindrischen Konturabschnitt vorherrscht.

6. Radeinheit nach einem der Ansprüche 1 bis 5, wobei
- der Radprofilabschnitt (106.4) einen wenigstens teilweise gekrümmten Ausrundungsabschnitt umfasst, der zwischen dem Spurkranzabschnitt und dem inneren Ende (106.5) des zylindrischen Konturabschnitts angeordnet ist;
wobei
- der Ausrundungsabschnitt derart ausgebildet ist, dass sich, wenigstens im unverschlissenen oder neu profilierten Zustand, bei einer seitlichen Auslenkung des Felgenabschnitts (106.1) auf der Schiene (107) entlang der Rollachse (106.2) während des Normalbetriebes die Kontaktstelle kontinuierlich über den Ausrundungsabschnitt verschiebt;
und/oder
- der Ausrundungsabschnitt derart ausgebildet ist, dass sich, wenigstens im unverschlissenen oder neu profilierten Zustand, bei einer seitlichen Auslenkung des Felgenabschnitts (106.1) auf der Schiene (107) entlang der Rollachse (106.2) zu jedem Zeitpunkt während des Normalbetriebs auf einer geraden Spur die Kontaktstelle die einzige zusammenhängende Kontaktstelle zwischen dem Felgenabschnitt (106.1) und der Schiene (107) bildet.

7. Radeinheit nach Anspruch 6, wobei
- der Ausrundungsabschnitt in Abhängigkeit von einer Geometrie der Spur, insbesondere einer Kurvenradiusverteilung entlang der Spur, ausgebildet ist, und/oder
- der Ausrundungsabschnitt in Abhängigkeit von einer Geometrie eines Schienenkopfes (107.1) der Schiene (107) ausgebildet ist;
und/oder
- der Ausrundungsabschnitt in Abhängigkeit von einer Neigung der Schiene (107), insbesondere eines Stegs (107.2) der Schiene (107), in Bezug auf eine Rad-Schiene-Kontaktebene ausgebildet ist, die durch die Spur an einer gegebenen Stelle entlang der Spur definiert ist;
und/oder
- der Ausrundungsabschnitt in Abhängigkeit von einer Verformung einer mit dem Felgenabschnitt (106.1) verbundenen Radeinheitswelle (105.1) ausgebildet ist, wobei die Radeinheitswelle (105.1) die Rollachse (106.2) definiert, und die Verformung aus einer Nennlast des Schienenfahrzeugs (101) resultiert;
und/oder
- der Ausrundungsabschnitt in Abhängigkeit von einer Steifigkeit, insbesondere einer Längssteifigkeit, einer Primärfedervorrichtung ausgebildet ist, die die Radeinheit mit dem Schienenfahrzeug (101) verbindet;
und/oder
- wenigstens ein Teil des Ausrundungsabschnitts, der an den zylindrischen Konturabschnitt angrenzt, seine Krümmung entlang der Rollachse (106.2) kontinuierlich ändert.

8. Radeinheit nach einem der Ansprüche 1 bis 7, wobei
- der Radprofilabschnitt (106.4), in dem unverschlissenen oder neu profilierten Zustand, einen Spurkranzdickenpunkt und/oder einen Übergangspunkt, eine innere aktive Kontaktfläche, eine innere aktive Kontaktflächenbreite entlang der Rollachse (106.2) und eine innere aktive Kontaktflächenkonturlänge definiert;
- der Spurkranzdickenpunkt verwendet wird, um eine Spurkranzdicke entlang der Rollachse (106.2) zu definieren, wobei der Spurkranzdickenpunkt insbesondere an einer Außenseite des Spurkranzabschnitts bei einem Radius angeordnet ist, der einem Radius des Radprofilabschnitts (106.4) in der Laufflächenbezugsebene plus 10 mm entspricht;
- der Übergangspunkt am Ende eines konischen Spurkranzbereichs, der sich näher an der Laufflächenbezugsebene befindet, angeordnet ist;
- die innere aktive Kontaktfläche durch den Spurkranzdickenpunkt oder den Übergangspunkt und durch die Laufflächenbezugsebene begrenzt ist;
- die innere aktive Kontaktflächenkonturlänge 105% bis 120%, vorzugsweise 107% bis 115%, weiter vorzugsweise 108% bis 110%, der inneren aktiven Kontaktflächenbreite beträgt.

9. Radeinheit nach einem der Ansprüche 1 bis 8, wobei
- der Radprofilabschnitt (106.4), im unverschlissenen oder neu profilierten Zustand, einen ersten konischen Abschnitt aufweist, der an einer Außenseite des Felgenabschnitts (106.1) gegenüber dem Spurkranzabschnitt angeordnet ist, wobei der erste konische Abschnitt ein inneres erstes Ende (106.6), ein äußeres zweites Ende (106.7) und eine erste Neigung in Bezug auf die Rollachse (106.2) aufweist;
wobei
- das innere erste Ende (106.6) in einem ersten Abstand von der Laufflächenbezugsebene angeordnet ist, wobei der erste Abstand 4 % bis 23 %, vorzugsweise 4 % bis 15 %, weiter vorzugsweise 4 % bis 8 %, der Felgenbreite beträgt und/oder der erste Abstand 5 mm bis 30 mm, vorzugsweise 5 mm bis 20 mm, weiter vorzugsweise 5 mm bis 10 mm, beträgt;
und/oder
- das äußere zweite Ende (106.7) in einem zweiten Abstand von der Laufflächenbezugsebene angeordnet ist, wobei der zweite Abstand 8 % bis 30 %, vorzugsweise 11 % bis 26 %, weiter vorzugsweise 15 % bis 22 %, der Felgenbreite beträgt und/oder der zweite Abstand 10 mm bis 40 mm, vorzugsweise 15 mm bis 35 mm, weiter vorzugsweise 20 mm bis 30 mm, beträgt
und/oder
- die erste Neigung 1/45 bis 1/15, vorzugsweise 1/43 bis 1/32, weiter vorzugsweise 1/40 bis 1/35 beträgt.

10. Radeinheit nach Anspruch 9, wobei
- der Radprofilabschnitt (106.4), in dem unverschlissenen oder neu profilierten Zustand, einen zweiten konischen Abschnitt aufweist, der an einer Außenseite des ersten konischen Abschnitts gegenüber dem Spurkranzabschnitt angeordnet ist, wobei der zweite konische Abschnitt ein inneres drittes Ende (106.7), ein äußeres viertes Ende (106.8) und eine zweite Neigung in Bezug auf die Rollachse (106.2) aufweist, wobei das innere dritte Ende (106.7) insbesondere im Wesentlichen mit dem äußeren zweiten Ende (106.7) des ersten konischen Abschnitts zusammenfällt;
wobei
- das innere dritte Ende (106.7) in einem dritten Abstand von der Laufflächenbezugsebene angeordnet ist, wobei der dritte Abstand 8 % bis 30 %, vorzugsweise 11 % bis 26 %, weiter vorzugsweise 15 % bis 22 %, der Felgenbreite beträgt und/oder der dritte Abstand 10 mm bis 40 mm, vorzugsweise 15 mm bis 35 mm, weiter vorzugsweise 20 mm bis 30 mm, beträgt
und/oder
- das äußere vierte Ende (106.8) in einem vierten Abstand von der Laufflächenbezugsebene angeordnet ist, wobei der vierte Abstand 33 % bis 48 %, vorzugsweise 37 % bis 46 %, weiter vorzugsweise 41 % bis 44 % der Felgenbreite beträgt und/oder der vierte Abstand 45 mm bis 65 mm, vorzugsweise 50 mm bis 62 mm, weiter vorzugsweise 55 mm bis 60 mm beträgt;
und/oder
- die zweite Neigung 1/25 bis 1/8, vorzugsweise 1/20 bis 1/9, weiter vorzugsweise 1/15 bis 1/10 beträgt.
und/oder
- die zweite Neigung größer als die erste Neigung ist.

11. Radeinheit nach einem der Ansprüche 1 bis 10, wobei sie für den Einsatz bei einer Nenngeschwindigkeit über 180 km/h, vorzugsweise über 200 km/h, weiter vorzugsweise über 250 km/h, weiter vorzugsweise über 300 km/h, ausgebildet ist.

12. Anordnung mit einem Radsatz umfassend zwei Radeinheiten nach einem der Ansprüche 1 bis 11 und einer Spur, wobei
- jede der beiden Radeinheiten ausgebildet ist, eine Schiene (107) der Spur zu berühren;
- die Radeinheiten und die Schienen (107), in einem Zustand des Radsatzes (105), der entlang der Rollachse (106.2) um 3 mm in Bezug auf eine nominell zentrale Position auf den Schienen (107) ausgelenkt ist, eine äquivalente Konizität des Radsatzes (105) definieren; und
- die äquivalente Konizität insbesondere im Bereich von 0 bis 1/100, vorzugsweise von 0 bis 1/150, weiter vorzugsweise von 0 bis 1/200 liegt,
wobei
- die Spur insbesondere ein Spurprofil mit einem Verhältnis von gekrümmten Abschnitten der Spur mit Kurvenradien von weniger als 1000 m aufweist, das über 15 %, vorzugsweise über 20 %, weiter vorzugsweise über 25 % liegt, und die äquivalente Konizität im Bereich von 0 bis 1/100, vorzugsweise von 0 bis 1/150, weiter vorzugsweise von 0 bis 1/200 liegt;
oder
- die Spur insbesondere ein Spurprofil mit einem Verhältnis von gekrümmten Abschnitten der Spur mit Kurvenradien von weniger als 1000 m aufweist, das unter 15 %, vorzugsweise unter 10 %, weiter vorzugsweise unter 5 % liegt, und die äquivalente Konizität im Bereich von 0 bis 1/200, vorzugsweise von 0 bis 1/300, weiter vorzugsweise von 0 bis 1/400 liegt.

13. Anordnung nach Anspruch 12, wobei
- jede der beiden Radeinheiten eine Radeinheit nach Anspruch 8 ist, und
wobei
- die Spur insbesondere ein Spurprofil mit einem Verhältnis von gekrümmten Abschnitten der Spur mit Kurvenradien von weniger als 1000 m aufweist, das über 15 %, vorzugsweise über 20 %, weiter vorzugsweise über 25 % liegt, und die innere aktive Kontaktflächenkonturlänge 105 % bis 108 %, vorzugsweise 105 % bis 107 %, weiter vorzugsweise 105 % bis 106 %, der inneren aktiven Kontaktflächenbreite beträgt;
oder
- die Spur insbesondere ein Spurprofil mit einem Verhältnis von gekrümmten Abschnitten der Spur mit Kurvenradien von weniger als 1000 m aufweist, das unter 15 %, vorzugsweise unter 10 %, weiter vorzugsweise unter 5 % liegt, und die innere aktive Kontaktflächenkonturlänge 108 % bis 120 %, vorzugsweise 108 % bis 115 %, weiter vorzugsweise 109 % bis 110 %, der inneren aktiven Kontaktflächenbreite beträgt.

14. Fahrwerk für ein Schienenfahrzeug, insbesondere ein Hochgeschwindigkeits-Schienenfahrzeug, umfassend wenigstens einen Radsatz (105) umfassend wenigstens zwei Radeinheiten nach einem der Ansprüche 1 bis 11.

15. Schienenfahrzeug, insbesondere Hochgeschwindigkeits-Schienenfahrzeug, umfassend einen Wagenkasten (102), der auf wenigstens einem Fahrwerk nach Anspruch 14 abgestützt ist.

16. Verfahren zur Auslegung einer Radeinheit nach einem der Ansprüche 1 bis 11, wobei die Radeinheit für den Einsatz in einem Schienenfahrzeug mit einer Nenngeschwindigkeit über 140 km/h, insbesondere einem Hochgeschwindigkeits-Schienenfahrzeug, ausgebildet ist, wobei die Radeinheit einen Felgenabschnitt (106.1) umfasst, wobei das Verfahren umfasst:
- Festlegen, dass der Felgenabschnitt (106.1) eine Rollachse (106.2) des Rades (106), eine Felgenbreite entlang der Rollachse (106.2) und eine zur Rollachse (106.2) senkrechte Laufflächenbezugsebene definiert;
- Festlegen, dass der Felgenabschnitt (106.1) eine Schnittkontur in einer Schnittebene aufweist, die die Rollachse (106.2) umfasst, wobei die Schnittkontur einen Radprofilabschnitt (106.4) mit einem Spurkranzabschnitt, einem Ausrundungsabschnitt und einem Laufflächenabschnitt umfasst, wobei der Laufflächenabschnitt dazu ausgebildet ist, eine Schiene (107) einer Spur an einer Kontaktstelle während des normalen Betriebs der Radeinheit zu berühren;
- Festlegen, dass der Laufflächenabschnitt, in einem unverschlissenen oder neu profilierten Zustand, einen nicht-zylindrischen Konturabschnitt umfasst;
**gekennzeichnet durch**
- Festlegen, dass der Laufflächenabschnitt, in dem unverschlissenen oder neu profilierten Zustand, ferner einen zylindrischen Konturabschnitt umfasst, wobei der zylindrische Konturabschnitt entlang der Rollachse (106.2) ein inneres Ende (106.5), ein äußeres Ende (106.6) und eine zylindrische Konturbreite zwischen dem inneren Ende (106.5) und dem äußeren Ende (106. 6) aufweist; wobei der zylindrische Konturabschnitt insbesondere derart angeordnet ist, dass entlang der Rollachse (106.2) eines aus das innere Ende (106.5) und das äußere Ende (106.6) einen Endabstand von der Laufflächenbezugsebene aufweist, der höchstens 50% der zylindrischen Konturbreite beträgt, wobei der zylindrische Konturabschnitt insbesondere die Laufflächenbezugsebene schneidet; und
- Festlegen einer Geometrie des Ausrundungsabschnitts unter Verwendung einer Transferfunktion, wobei die Transferfunktion als Funktion einer Geometrie der Spur, insbesondere einer Kurvenradiusverteilung entlang der Spur, und/oder als Funktion einer Geometrie eines Schienenkopfes (107.1) der Schiene (107), und/oder als Funktion einer Neigung der Schiene (107), insbesondere eines Steges (107. 2) der Schiene (107), in Bezug auf eine Rad-Schiene-Kontaktebene, die durch die Spur an einer gegebenen Stelle entlang der Spur definiert ist, und/oder als Funktion einer Verformung einer Radeinheitswelle (105.1), die mit dem Felgenabschnitt (106.1) verbunden ist, wobei die Radeinheitswelle (105. 1) die Rollachse (106.2) definiert, und wobei die Verformung aus einer Nennlast des Schienenfahrzeugs (101) resultiert und/oder als Funktion einer Steifigkeit, insbesondere einer Längssteifigkeit, einer primären Aufhängungsvorrichtung (104.1), die die Radeinheit mit dem Schienenfahrzeug (101) verbindet, geschaffen wird.

## Revendications

1. Unité de roue pour un véhicule ferroviaire ayant une vitesse nominale supérieure à 140 km/h, en particulier, un véhicule ferroviaire à grande vitesse, ladite unité de roue comprenant une section de jante, dans laquelle
- ladite section de jante (106.1) définit un axe de roulement (106.2) de ladite roue 106, une largeur de jante le long dudit axe de roulement (106.2) et un plan de référence de la bande de roulement perpendiculaire audit axe de roulement (106.2),
- ladite section de jante (106.1) a un contour de section (106.3) dans un plan de coupe comprenant ledit axe de roulement (106.2),
- ledit contour de section (106.3) comprend une section de profil de roue (106.4),
- ladite section de profil de roue (106.4) comprend une section de boudin et une section de bande de roulement,
- ladite section de bande de roulement est configurée pour entrer en contact avec un rail (107) d'une voie dans un emplacement de contact pendant le fonctionnement normal de ladite unité de roue ;
- ladite section de bande de roulement, dans un état non usé ou reprofilé, comprend une section de contour non cylindrique ;
**caractérisé en ce que**
- ladite section de bande de roulement, dans ledit état non usé ou reprofilé, comprend en outre une section de contour cylindrique ;
- ladite section de contour cylindrique, le long dudit axe de roulement (106.2), a une extrémité interne (106.5), une extrémité externe (106.6) et une largeur de contour cylindrique entre ladite extrémité interne (106.5) et ladite extrémité externe (106.6) ;
- ladite section de contour cylindrique est située de telle sorte que, le long dudit axe de roulement (106.2), l'une de ladite extrémité intérieure (106.5) et de ladite extrémité extérieure (106.6) a une distance d'extrémité dudit plan de référence de la bande de roulement qui est au plus de 50 % de ladite largeur de contour cylindrique, ladite section de contour cylindrique coupant ledit plan de référence de la bande de roulement.

2. Unité de roue selon la revendication 1, dans laquelle
- ladite distance d'extrémité est de 0 % à 50 %, de préférence de 10 % à 40 %, plus préférablement de 20 % à 30 %, de ladite largeur de contour cylindrique ;
et/ou
- ladite distance d'extrémité est de 0 mm à 30 mm, de préférence de 5 mm à 25 mm, plus préférentiellement de 5 mm à 10 mm ;
et/ou
- ladite extrémité intérieure (106.5) a ladite distance d'extrémité par rapport audit plan de référence de la bande de roulement ;
et/ou
- ladite extrémité intérieure (106.5) est située entre ladite section de boudin et ledit plan de référence de la bande de roulement.

3. Unité de roue selon la revendication 1 ou 2, dans laquelle
- ladite largeur de contour cylindrique est d'au moins 4 %, de préférence d'au moins 7 %, plus préférablement d'au moins 10 %, de ladite largeur de jante ;
et/ou
- ladite largeur de contour cylindrique est d'au moins 5 mm, de préférence d'au moins 10 mm, plus préférablement d'au moins 15 mm ;
et/ou
- ladite largeur de contour cylindrique est d'au plus 14 %, de préférence d'au plus 16 %, plus préférentiellement d'au plus 18 %, de ladite largeur de jante ;
et/ou
- ladite largeur de contour cylindrique est d'au plus 20 mm, de préférence d'au plus 22 mm, plus préférentiellement d'au plus 25 mm ;

4. Unité de roue selon la revendication 3, dans laquelle
- ladite section de contour cylindrique, sur ladite largeur de contour cylindrique, présente un écart par rapport à un contour idéalement cylindrique, dans lequel
- ledit écart est tel qu'une inclinaison locale de ladite section de contour cylindrique par rapport audit contour idéalement cylindrique est inférieure à 1/200, de préférence inférieure à 1/250, plus préférentiellement inférieure à 1/300.

5. Unité de roue selon l'une quelconque des revendications 1 à 4, dans laquelle
- ladite section de contour cylindrique est configurée de telle sorte que, au moins pendant le fonctionnement à ladite vitesse nominale sur une voie plane rectiligne, un comportement de point de contact indifférent avec une distribution statistique dudit emplacement de contact le long dudit axe de roulement (106.2) prévaut sur ladite section de contour cylindrique ;
et/ou
- ladite section de contour cylindrique est configurée de sorte que, au moins lors d'un fonctionnement à ladite vitesse nominale sur une voie rectiligne plane, un comportement d'usure indifférent avec une distribution statistique d'usure de ladite section de bande de roulement le long dudit axe de roulement (106.2) prévaut sur ladite section de contour cylindrique.

6. Unité de roue selon l'une quelconque des revendications 1 à 5, dans laquelle
- ladite section de profil de roue (106.4) comprend une section de filet au moins partiellement incurvée située entre ladite section de boudin et ladite extrémité intérieure (106.5) de ladite section de contour cylindrique ;
dans lequel
- ladite section de filet est configurée de sorte que, au moins dans ledit état non usé ou reprofilé, lors d'un déplacement latéral de ladite section de jante (106.1) sur ledit rail (107) le long dudit axe de roulement (106.2) pendant le fonctionnement normal, ledit emplacement de contact se déplace en continu sur ladite section de filet ;
et/ou
- ladite section de filet est configurée de telle sorte que, au moins dans ledit état non usé ou reprofilé, lors d'un déplacement latéral de ladite section de jante (106.1) sur ledit rail (107) le long dudit axe de roulement (106.2) à tout moment en temps pendant le fonctionnement normal sur une voie rectiligne, ledit emplacement de contact forme l'unique emplacement de contact cohérent entre ladite section de jante (106.1) et ledit rail (107).

7. Unité de roue selon la revendication 6, dans laquelle
- ladite section de filet est configurée en fonction d'une géométrie de ladite voie, notamment une distribution de radius de courbure le long de ladite voie,
et/ou
- ladite section de filet est configurée en fonction d'une géométrie d'un champignon de rail (107.1) dudit rail (107) ;
et/ou
- ladite section de filet est configurée en fonction d'une inclinaison dudit rail (107), notamment, d'une âme (107.2) dudit rail (107), par rapport à un plan de contact roue-rail défini par ladite voie en un emplacement donné le long de ladite voie ;
et/ou
- ladite section de filet est configurée en fonction d'une déformation d'un arbre d'unité de roue (105.1) relié à ladite section de jante (106.1), ledit arbre d'unité de roue (105.1) définissant ledit axe de roulement (106.2), et ladite déformation résultant d'un charge nominale dudit véhicule ferroviaire (101).
et/ou
- ladite section de filet est configurée en fonction d'une raideur, notamment d'une raideur longitudinale, d'un dispositif de suspension primaire reliant ladite unité de roue audit véhicule ferroviaire (101)
et/ou
- au moins une partie de ladite section de filet située adjacente à ladite section de contour cylindrique change continuellement sa courbure le long dudit axe de roulement (106.2).

8. Unité de roue selon l'une quelconque des revendications 1 à 7, dans laquelle
- ladite section de profil de roue (106.4), dans ledit état non usé ou reprofilé, définit un point d'épaisseur de boudin et/ou un point de transition, une zone active de contact interne, une largeur de zone active de contact interne le long dudit axe de roulement (106.2), et une longueur de contour de zone de contact active intérieure ;
- ledit point d'épaisseur de boudin est utilisé pour définir une épaisseur de boudin le long dudit axe de roulement (106.2) ; ledit point d'épaisseur de boudin, en particulier, étant situé sur un côté extérieur de ladite section de boudin à un radius qui correspond à un radius de ladite section de profil de roue (106.4) dans ledit plan de référence de bande de roulement plus 10 mm ;
- ledit point de transition est situé à l'extrémité d'une zone de boudin conique qui est située plus près dudit plan de référence de la bande de roulement ;
- ladite zone de contact active interne est confinée par ledit point d'épaisseur de boudin ou ledit point de transition et par ledit plan de référence de la bande de roulement ;
- ladite longueur du contour de la zone de contact active intérieure est de 105 % à 120 %, de préférence de 107 % à 115 %, plus préférablement de 108 % à 110 %, de ladite largeur de la zone de contact active intérieure.

9. Unité de roue selon l'une quelconque des revendications 1 à 8, dans laquelle
- ladite section de profil de roue (106.4), dans ledit état non usé ou reprofilé, a une première section conique située sur un côté extérieur de ladite section de jante (106.1) opposée à ladite section de boudin, ladite première section conique ayant une première extrémité interne (106.6), une deuxième extrémité externe (106.7) et une première inclinaison par rapport audit axe de roulement (106.2) ;
dans lequel
- ladite première extrémité intérieure (106.6) est située à une première distance dudit plan de référence de la bande de roulement, ladite première distance étant de 4 % à 23 %, de préférence de 4 % à 15 %, plus préférablement de 4 % à 8 %, de ladite largeur de jante et /ou ladite première distance étant de 5 mm à 30 mm, de préférence de 5 mm à 20 mm, plus préférablement de 5 mm à 10 mm ;
et/ou
- ladite seconde extrémité extérieure (106.7) est située à une seconde distance dudit plan de référence de la bande de roulement, ladite seconde distance étant de 8 % à 30 %, de préférence de 11 % à 26 %, plus préférentiellement de 15 % à 22 %, de ladite largeur de jante et /ou ladite deuxième distance étant de 10 mm à 40 mm, de préférence de 15 mm à 35 mm, plus préférablement de 20 mm à 30 mm ;
et/ou
- ladite première inclinaison est de 1/45 à 1/15, de préférence de 1/43 à 1/32, plus préférentiellement de 1/40 à 1/35.

10. Unité de roue selon la revendication 9, dans laquelle
- ladite section de profil de roue (106.4), dans ledit état non usé ou reprofilé, a une deuxième section conique située sur un côté extérieur de ladite première section conique opposée à ladite section de boudin, ladite deuxième section conique ayant une troisième extrémité intérieure (106.7 ), une quatrième extrémité extérieure (106.8) et une deuxième inclinaison par rapport audit axe de roulement (106.2), ladite troisième extrémité intérieure (106.7), en particulier, coïncidant sensiblement avec ladite deuxième extrémité extérieure (106.7) de ladite première section conique ;
dans laquelle
- ladite troisième extrémité intérieure (106.7) est située à une troisième distance dudit plan de référence de la bande de roulement, ladite troisième distance étant de 8 % à 30 %, de préférence de 11 % à 26 %, plus préférablement de 15 % à 22 %, de ladite largeur de jante et /ou ladite troisième distance étant de 10 mm à 40 mm, de préférence de 15 mm à 35 mm, plus préférablement de 20 mm à 30 mm ;
et/ou
- ladite quatrième extrémité extérieure (106.8) est située à une quatrième distance dudit plan de référence de la bande de roulement, ladite quatrième distance étant de 33 % à 48 %, de préférence de 37 % à 46 %, plus préférablement de 41 % à 44 %, de ladite largeur de jante et /ou ladite quatrième distance étant de 45 mm à 65 mm, de préférence de 50 mm à 62 mm, plus préférablement de 55 mm à 60 mm ;
et/ou
- ladite deuxième inclinaison est de 1/25 à 1/8, de préférence de 1/20 à 1/9, plus préférentiellement de 1/15 à 1/10
et/ou
- ladite seconde inclinaison est supérieure à ladite première inclinaison.

11. Unité de roue selon l'une quelconque des revendications 1 à 10, dans laquelle elle est configurée pour être utilisée à une vitesse nominale supérieure à 180 km/h, de préférence supérieure à 200 km/h, plus préférablement supérieure à 250 km/h, plus préférablement supérieure à 300 km/h. h.

12. Arrangement avec un jeu de roues comprenant deux unités de roue selon l'une quelconque des revendications 1 à 11, dans lequel
- chacune desdites deux unités de roue est configurée pour venir en contact avec un rail (107) de ladite voie ;
- lesdites unités de roues et lesdits rails (107), dans un état dudit train de roues (105) qui est décalé le long dudit axe de roulement (106.2) de 3 mm par rapport à une position nominalement centrale sur lesdits rails (107), définissent une conicité équivalente dudit jeu de roues (105); et
- ladite conicité équivalente, en particulier, va de 0 à 1/100, de préférence de 0 à 1/150, plus préférentiellement de 0 à 1/200,
dans lequel
- ladite voie, notamment, présente un profil de voie avec un rapport de sections courbes de ladite voie avec des radius de courbure inférieur à 1000 m, qui est supérieur à 15 %, de préférence supérieur à 20 %, plus préférentiellement supérieur à 25 %, et ladite conicité équivalente va de 0 à 1/100, de préférence de 0 à 1/150, plus préférablement de 0 à 1/200 ;
ou
- ladite voie, notamment, a un profil de voie avec un rapport de sections courbes de ladite voie avec des radius de courbure inférieur à 1000 m, qui est inférieur à 15 %, de préférence inférieur à 10 %, plus préférentiellement inférieur à 5 %, et ladite conicité équivalente varie de 0 à 1/200, de préférence de 0 à 1/300, plus préférentiellement de 0 à 1/400.

13. Arrangement selon la revendication 12, dans lequel
- chacune desdites deux unités de roue est une unité de roue selon la revendication 8, et
dans lequel
- ladite voie, en particulier, a un profil de voie avec un rapport de sections courbes de ladite voie avec des rayons de courbure inférieur à 1000 m, qui est supérieur à 15 %, de préférence supérieur à 20 %, plus préférentiellement supérieur à 25 %, et ladite longueur de contour de zone de contact active intérieure est de 105 % à 108 %, de préférence de 105 % à 107 %, plus préférablement de 105 % à 106 %, de ladite largeur de zone de contact active intérieure
ou
- ladite voie, en particulier, a un profil de voie avec un rapport de sections courbes de ladite voie avec des rayons de courbure inférieur à 1000 m, qui est inférieur à 15 %, de préférence inférieur à 10 %, plus préférentiellement inférieur à 5 %, et ladite longueur de contour de zone de contact active intérieure est de 108 % à 120 %, de préférence de 108 % à 115 %, plus préférablement de 109 % à 110 %, de ladite largeur de zone de contact active interne.

14. Train de roulement pour un véhicule ferroviaire, en particulier un véhicule ferroviaire à grande vitesse, comprenant au moins un jeu de roues (105) comprenant deux unités de roue selon l'une quelconque des revendications 1 à 11.

15. Véhicule ferroviaire, en particulier véhicule ferroviaire à grande vitesse, comprenant une caisse de wagon (102) supportée sur au moins un train de roulement selon la revendication 14.

16. Procédé de conception d'une unité de roue selon l'une quelconque des revendications 1 à 11, ladite unité de roue étant configurée pour être utilisée dans un véhicule ferroviaire ayant une vitesse nominale supérieure à 140 km/h, en particulier un véhicule ferroviaire à grande vitesse, ladite unité de roue comprenant une section de jante (106.1), ledit procédé comprenant :
- spécifier que ladite section de jante (106.1) définit un axe de roulement (106.2) de ladite roue (106), une largeur de jante le long dudit axe de roulement (106.2) et un plan de référence de bande de roulement perpendiculaire audit axe de roulement (106.2)
- spécifier que ladite section de jante (106.1) a un contour de section dans un plan de section comprenant ledit axe de roulement (106.2), ledit contour de section comprenant une section de profil de roue (106.4) avec une section de boudin, une section de filet et une section de bande de roulement, ladite une section de bande de roulement étant configurée pour entrer en contact avec un rail (107) d'une voie dans un emplacement de contact pendant le fonctionnement normal de ladite unité de roue ;
- préciser que ladite section de bande de roulement, dans un état non usé ou reprofilé, comprend une section de contour non cylindrique ;
**caractérisé par**
- spécifier que ladite section de bande de roulement, dans ledit état non usé ou reprofilé, comprend en outre une section de contour cylindrique, ladite section de contour cylindrique, le long dudit axe de roulement (106.2), ayant une extrémité intérieure (106.5), une extrémité extérieure (106.6) et une largeur de contour cylindrique entre ladite extrémité interne (106.5) et ladite extrémité externe (106.6) ; ladite section de contour cylindrique, en particulier, étant située de telle sorte que, le long dudit axe de roulement (106.2), l'une de ladite extrémité intérieure (106.5) et de ladite extrémité extérieure (106.6) a une distance d'extrémité dudit plan de référence de la bande de roulement qui est au plus de 50 % de ladite largeur de contour cylindrique, ladite section de contour cylindrique, en particulier, coupant ledit plan de référence de la bande de roulement ; et
- spécifier une géométrie de ladite section de filet à l'aide d'une fonction de transfert, ladite fonction de transfert étant créée en fonction d'une géométrie de ladite voie, notamment une distribution de radius de courbure le long de ladite voie, et/ou en fonction d'une géométrie d'un rail tête (107.1) dudit rail (107), et/ou en fonction d'une inclinaison dudit rail (107), notamment, d'une âme (107.2) dudit rail (107), par rapport à un plan de contact roue-rail défini par ladite voie à un emplacement donné le long de ladite voie, et/ou en fonction d'une déformation d'un arbre d'unité de roue (105.1) relié à ladite section de jante (106.1), ledit arbre d'unité de roue (105.1) définissant ledit axe de roulement (106.2), et ladite déformation résultant d'une charge nominale dudit véhicule ferroviaire (101) et/ou en fonction d'une raideur, notamment longitudinale, d'un dispositif de suspension primaire (104.1) reliant ladite unité de roue audit véhicule ferroviaire (101).
